# EUROPÄISCHE PATENTANMELDUNG

(11) **EP 1 530 904 A1**
(43) Veröffentlichungstag der Anmeldung: **18.05.2005**
(21) Anmeldenummer: 04027007.6
(22) Anmeldetag: 12.11.2004
(51) Int. Cl.: A21D 6/00, A21D 10/02, A21D 13/08

(54) **Gefrorener Rührkuchenteig**

(30) Priorität: 13.11.2003 DE 10353048
(71) Anmelder: Bäcker Bachmeier GmbH & Co. KG, 84307 Eggenfelden/Ndb. (DE)
(72) Erfinder: Bachmeier, Christian, 84307 Eggenfelden/Ndb (DE); Bachmeier, Lorenz, 84307 Eggenfelden/Ndb. (DE)
(74) Vertreter: Dey, Michael, Dr.

(57) **Zusammenfassung**

Die Erfindung betrifft einen eingefrorenen Kuchen, wobei ein nicht vorgebackener Kuchenteig, insbesondere Rührkuchenteig, in der zum späteren Backen vorgesehenen Backform eingefroren wird. Nach optimalem Auftauen kann der Kuchen direkt in der Backform, in der der Teig auch eingefroren war, gebacken werden, ohne dass eine Weiterbearbeitung oder Umfüllung des Teiges erforderlich ist.

## Beschreibung

Die Erfindung betrifft einen eingefrorenen Kuchen, wobei ein nicht vorgebackener Kuchenteig, insbesondere Rührkuchenteig, in der zum späteren Backen vorgesehenen Backform eingefroren wird. Nach kurzem Auftauen oder auch sofort ohne Auftauen kann der Kuchen direkt in der Backform, in der der Teig auch eingefroren war, gebacken werden, ohne dass eine Weiterbearbeitung oder Umfüllung des Teiges erforderlich ist.

Tiefgefrorene Produkte erfreuen sich zunehmender Beliebtheit, da sie vom Endverbrauchen in kurzer Zeit und ohne großen eigenen Aufwand zubereitet werden können. Zudem weisen tiefgefrorene Produkte eine hohe Haltbarkeitsdauer auf und können je nach Bedarf zu breitet werden. So haben beispielsweise Brezen- oder Brötchenteiglinge sowohl in Backstuben als auch in Privathaushalten Einzug gefunden. Auch andere Backwaren werden in tiefgefrorener Form für Gastronomie- bzw. Endverbraucher zu Verfügung gestellt. (siehe z. B. DE 43 20 050 C2), EP 0 305 071 A2; EP 0 648 421; EP 0 831 709 B1, EP 1 161 874 A2, JP 04-200338, JP 08-252061, JP 08-280319, JP 11-056215,WO 01/78514 sowie WO 02/19829).

Neben den Backwaren besteht nunmehr aber auch Interesse und Bedarf an der Möglichkeit, beispielsweise sonntags, wenn die Läden geschlossen sind, kurzfristig einen "frischen" Kuchen erhalten zu können. Hierzu gibt es Produkte, in denen fertiggebackene Kuchen in verschiedenen Arten von Verpackungen, beispielsweise Vakuumverpackungen mit längerer Haltbarkeit angeboten werden. Diese Kuchen werden aber nicht "frisch" gebacken und enthalten zudem meistens chemische Zusätze oder Konservierungsmittel, um eine Haltbarkeit über einige Tage oder Wochen zu gewährleisten.

Weiterhin verfügen viele Haushalte, insbesondere Single-Haushalte heutzutage oftmals nur noch über eine sehr begrenzte Ausrüstung an Küchengeräten, sodass eine tatsächliche Herstellung eines Kuchens, beispielsweise mittels einer Rührschüssel, eines Küchenmixers und entsprechender Backformen in solchen haushalten gar nicht mehr möglich ist.

Eine Aufgabe der vorliegenden Erfindung war es deshalb, eine Möglichkeit zu schaffen mit der seitens des Endverbrauchers z. B. in Privathaushalten oder der Gastronomie auf einfache Weise schnell ein frischer Kuchen zubreitet werden kann, ohne, dass der Endverbraucher einen Teig zubreiten oder bearbeiten bzw. in geeignete Backformen umfüllen muss.

Diese Aufgabe wird erfindungsgemäß gelöst durch einen gefrorenen Kuchen, welcher dadurch gekennzeichnet ist, dass der nicht vorgebackene Kuchenteig, insbesondere ein Bisquit- oder Sandkuchenteig, in einer Backform eingefroren ist.

Erfindungsgemäß wird ein Kuchen, insbesondere ein Rührkuchen bereitgestellt, der vom Verbraucher selbstgebacken werden kann. Der Kuchen wird als tiefgefrorener Kuchenteig, welcher zusammen mit der Backform eingefroren wurde und später direkt in dieser Backform, in der der Kuchenteig eingefroren war gebacken werden kann, bereitgestellt. Auf diese Weise kann ein frischgebackener Kuchen erhalten werden, ohne dass beim Endkunden eine weitere Zubreitung oder Bearbeitung erforderlich ist. Der Kuchen kann im Ofen gemäß entsprechender Anleitung auf einfach Weise gebacken werden, ohne dass ein Umfüllen in eine Backform oder ein sonstiges Weiterbearbeiten des Teiges erforderlich wäre. Der Teig kann vielmehr in der bereits vorhandenen Form im Ofen gebacken werden.

Die Haltbarkeit des in der Backform eingefrorenen Teiges beträgt beispielsweise in der Gefriertruhe ca. ½ bis 1 Jahr, sodass die Vorhaltung eines solchen Kuchens ohne große Probleme möglich ist. Bevorzugt wird der Kuchen gefroren, mehr bevorzugt tiefgefroren, bei einer Temperatur von -1°C bis -50 °C, mehr bevorzugt -5 °C bis -30 °C und am meisten bevorzugt -15°C bis -20°C. Die Haltbarkeit wird somit durch Tiefkühlung des nicht vorgebackenen Teiges und nicht durch Zugabe von chemischen Haltbarkeitszusätzen erzielt.

Bei dem Kuchenteig handelt es sich vorzugsweise um einen zähflüssigen Teig, welcher insbesondere gleichmäßig geport und luftig ist.

Unter Rührkuchen versteht man einen aus Rührteig gebackenen Kuchen. Dieser kann eine längliche oder runde Form haben. Man unterscheidet zwei Varianten des Rührkuchens, zum einen den Bisquit- oder Sandkuchen und zum anderen den Eierkuchen (Pancake).

Biskuitkuchen oder Sandkuchen, die auch als Angel oder Sponge Cakes bezeichnet werden, werden hergestellt, ohne dass der Kuchen "gehen" muss, da auf die Zugabe von Hefe verzichtet wird. Diese Rührkuchenarten unterscheiden sich wiederum zum Grease-Cake (Fettkuchen). Der Grease-Cake hat, wie der Name schon sagt im Unterschied zum Angel oder Sponge Cake einen relativ hohen Fettgehalt. Dieser Fettgehalt macht den Kuchen schwer und verhindert ein leichtes aufgehen und eine lockere, luftige Porung.

Erfindungsgemäß bevorzugt handelt es sich bei dem Rührkuchen bzw. Kuchenteig um einen Bisquit- oder Sandkuchen.

Die Bisquit- und Sandkuchen, die zu den Hochgebäcken zählen, erhalten die lockere, große Porung aufgrund des speziellen Herstellverfahrens. Im Gegensatz zum Eierkuchen beträgt die Eimenge für den Bisquit- und Sandkuchen nur ca. 25% des gesamten Rohstoffeinsatzes. Die Zutaten, insbesondere Mehl, Weizenpuder, Zucker, Eier sowie Backmittel werden zusammen mit Öl oder pflanzlichen gehärteten oder ungehärteten Fetten aufgeschlagen und nicht gerührt. Durch dieses Aufschlagen wird der Teig gleichmäßig geport und sehr luftig. Der Kuchen bleibt auch nach dem Backen gleich hoch, ca. 10-15 cm. Die lockere und luftige Porung erreicht das Produkt im Backofen, im gefrorenen und aufgetauten Zustand. Durch die Tiefkühlung kann auf die Zugabe von Konservierungsstoffen verzichtet werden, sodass der Kuchenteig bevorzugt frei von Konservierungsstoffen ist. Die leichte, schaumige Masse bildet die Basis für dieses Hochgebäck. Die luftige Porung und die daraus resultierende Struktur sind typisch für diesen Kuchen. Diese Besonderheiten als auch die lange Frischhaltung unterscheiden den Bisquit- und Sandkuchen im wesentlich zum Eierkuchen, der zu den Flachgebäcken zählt.

Die erfindungsgemäßen Bisquit- oder Sandkuchen unterscheiden sich erheblich vom Eierkuchen. Eierkuchen können unterschiedlich gestaltet werden, das beruht aber immer auf demselben Grundprinzip. Die mengenmäßig größte Zutat sind die Eier, dies wird durch den Namen Eierkuchen ausdrücklich hervorgehoben. Das bedeutet zwar ein schnelles hochziehen des Kuchens aber eben auch ein noch rascheres Absitzen des Gebäcks. Die Eier (50% - Rest Rohstoffeinsatz) verleihen dem Kuchen eine gewisse Schwere, weshalb dieses Flachgebäck auch mehr in sich zusammenfällt sobald es den Ofen verlässt - es wird flach und schwer - vergleichbar mit einem Auflauf. Auch im Herstellverfahren unterscheiden sich Biskuit- und Eierkuchen. Der Eierkuchen wird gerührt und nicht aufgeschlagen, dadurch ist dieser Teig weniger porig und luftig, was auch dazu führt, dass der Kuchen nicht so sehr aufgeht wie eben ein Biskuitkuchen.

Die Bisquitmasse unterscheidet sich zur Sandkuchenmasse aufgrund des unterschiedlichen Herstellungsvorgangs.

Für die Bisquitmasse werden Eiweiß und Zucker aufgeschlagen ebenso Eigelb und Zucker. Die Eiweißmasse wird anschließend unter die Eigelbmasse gezogen. Mehl, Weizenpuder und Backpulver werden vermischt und in diese Masse aus Eiweiß und Eigelb untergehoben. Bei dieser Bisquitmasse kann auf die Zugabe von Emulgatoren verzichtet werden. Die luftige, lockere Porung kommt unter anderem durch das Unterheben der Eiweißmasse zustande.
Zum Schluss wird die Masse in Formen wie z.B. aus Alu oder Pappe gefüllt und gefrostet.

Die Sandkuchenmasse wird im all-in-all-Verfahren hergestellt. Hier werden Zucker, Mehl, Weizenpuder, Eier, Speiseöl, Aromen, Backpulver und Emulgatoren ca. 8 Min. zusammen aufgeschlagen bis die Masse ein festes Litergewicht hat. Das ausgiebige Rühren dieser Masse bewirkt eine lockere und luftige Porung der Masse sprich des Kuchens.
Auch diese fertige Masse wird in Formen gefüllt und gefrostet.

Der wesentliche Unterschied des erfindungsgemäßen Kuchens zu den derzeit im Handel erhältlichen Backwaren ist, dass es sich um eine flüssige, schaumige Masse für ein Hochgebäck, Bisquit- und Sandkuchen und nicht um Flachgebäck, wie z. B. Eierkuchen handelt.

Im Großen und Ganzen handelt es sich bei Bisquitteigen bzw. Kuchen um einen sehr schnell und unkompliziert herzustellenden Kuchen, die schnell ausbacken und zudem viel geschmacklichen Gestaltungsspielraum bieten. Die leichte, lockere Bisquit- oder Sandmasse bilden die Basis für diese Kuchen.

Auch nach dem Backen bleiben die *Angel Cake* locker und luftig, auch die Porung verhält sich dementsprechend, zudem fällt der Kuchen auch nach dem ausbacken nicht in sich zusammen.

Der Bisquitkuchen bleibt lange frisch, ohne dabei an Geschmack zu verlieren.

Der erfindungsgemäß bevorzugte Bisquitteig enthält anteilig an die Gesamtmasse
20 bis 30 Gew.-%, insbesondere ca. 25 Gew.-% Eier
20 bis 35 Gew.-%, insbesondere ca. 28 Gew.-% Zucker
10 bis 20 Gew.-%, insbesondere ca. 15 Gew.-% Fett/ungehärtetes Fett
10 bis 20 Gew.-%, insbesondere ca. 15 Gew.-% Mehl
10 bis 20 Gew.-%, insbesondere ca. 15 Gew.-% Weizenpuder
0,5 bis 1,5 Gew.-%, insbesondere ca. 0,9 Gew.-% Backpulver

Der erfindungsgemäße Sandkuchenteig enthält anteilig an die Gesamtmasse
15 bis 25 Gew.-%, insbesondere ca. 20 Gew.-% Fett/ungehärtetes Fett
20 bis 30 Gew.-%, insbesondere ca. 25 Gew-.% Zucker
20 bis 30 Gew.-%, insbesondere ca. 25 Gew.-% Eier
10 bis 20 Gew.-%, insbesondere ca. 15 Gew.-% Mehl
10 bis 20 Gew.-%, insbesondere ca. 15 Gew.-% Weizenpuder
0,2 bis 1 Gew.-%, insbesondere ca. 0,4 Gew.-% Backpulver

Der Anteil an Eiern bewegt sich in beiden eingesetzten Produkten bei ca. 25 Gew.-% der Gesamtmenge an Rohstoffen und ist insbesondere ≤ 30 Gew.-%, mehr bevorzugt ≤ 27 Gew.-%. Der Anteil an Fett ist insbesondere ≤ 25 Gew.-%, bevorzugt ≤ 22 Gew.-%

Bei Sandkuchen bevorzugt wird der Fettanteil in Form von Speiseöl eingebracht während bei Bisquitmassen der Fettanteil in fester bzw. geschmeidiger Form beigeben wird.

Der jeweilige Vorteil liegt im Anschlagen der Masse, da im Sandmassenbereich mit Emulgatoren gearbeitet wird und das flüssige Speiseöl sich mit den anderen Zutaten schnell verbindet, sodass in kurzer Zeit eine voluminöse Masse erreicht wird.

Die Bisquitmasse wird mit Fett schaumig gerührt, Eigelb nach und nach zugegeben. Diese Masse bildet ein Volumen, das durch die Stabilität und Festigkeit des Fettes eine Art Stützgerüst bildet. Anschließend wird die Masse noch mit dem restlichen Eiweiß das mit Zucker aufgeschlagen wurde vermengt und der Rest der Zutaten untergehoben.

Der Kuchen kann weiterhin Geschmacksstoffe, wie etwa Nüsse, z. B. Haselnüsse, Mandeln, Schokotropfen, Kakao, Zitronenaroma, Eierliköraroma, Rotwein, Gewürze oder Früchte enthalten, sodass je nach Geschmacksrichtung Sand-, Frucht- oder auch Gewürzkuchen gebacken werden können. Weitere optionale Inhaltsstoffe sind Stabilisatoren, z. B. Sorbit , Emulgatoren, Z. B. E471, E472b, Magermilchpulver, Aromen, Backtriebmittel, z. B. E450, E500 etc. Eine bevorzugte Rezeptur enthält Zucker, Weizenmehl, Eier Speiseöl, pflanzliche Fette, Weizenpuder (Nüsse, Schokotropfen, Mandeln), Kakao, Stabilisator: Sorbit, Emulgator: E471, 472b, Magermilchpulver, Backtriebmittel: E 450, E 500, Aroma.

Die miteingefrorene Backform wird aus einem sowohl hitze- als auch kältebeständigen Material gefertigt, z. B. aus Pappe, Aluminium oder Kunststoff.

Die Erfindung betrifft auch die Herstellung des oben beschriebenen in der Backform eingefrorenen Kuchenteigs und insbesondere ein Verfahren zur Herstellung eines gefrorenen Kuchens, welcher dadurch gekennzeichnet ist, dass man einen zählflüssigen, nicht vorgebackenen Kuchenteig, insbesondere einen Bisquit- oder Sandkuchenteig, in eine Backform füllt und den in der Backform vorliegenden Teig zusammen mit der Backform einfriert.

Zur Herstellung des erfindungsgemäßen eingefrorenen Kuchens werden zunächst die Zutaten zusammengegeben und daraus ein (zäh-)flüssiger Teig gebildet. Die Zutaten können im so genannten all-in-all-Verfahren oder auch nacheinander miteinander aufgeschlagen werden. Der Rührkuchen muss, wie der Name schon sagt, geduldig gerührt bzw. aufgeschlagen werden um ein optimales Ergebnis zu erzielen. Die sämige oder zähflüssige Bisquitmasse bzw. Sandkuchenmasse wird dann in eine Backform gefüllt, beispielsweise in eine Backform aus Aluminium, Pappe oder hitzebeständigem Kunststoff. Geeignete Formen sind beispielsweise Rundund Kastenformen aber auch eine gugelhupfartige Form.

Die mit dem Kuchenteig, insbesondere einer Bisquitmasse oder Sandkuchenmasse gefüllte Form wird anschließend eingefroren, beispielsweise durch Schockforsten. Wichtig ist hierbei, dass der Teig in nicht im vorgebackenem Zustand eingefroren wird.

Die mit Teig gefüllten, eingefrorenen Backformen können gegebenenfalls in Umkartons verpackt und dann ausgeliefert werden. Beim Kunden, beispielsweise beim Endverbraucher bzw. in der Gastronomie oder in einer Bäckerei oder Konditorei kann der erfindungsgemäße in der Backform gefrorene Kuchen dann gebacken werden. Das Backen kann nach Backanleitung erfolgen, wobei der Kuchen gegebenenfalls zunächst aufgetaut und dann gebacken oder sofort also ohne zwischendurch durchgeführten Auftauschritt gebacken wird. Da als Backform zum Einfrieren eine hitze- und kältebeständige Backform verwendet wurde, entfällt beim Endkunden jegliche Art der weiteren Umfüllung oder Weiterbearbeitung. Der Teig bzw. Kuchen wird vielmehr direkt in der Backform gebacken, in der der gefrorene Teigling geliefert wurde. Da der Teig nicht vorgebacken eingefroren wurde, geht der Kuchen beim Backen auf, sodass man tatsächlich einen frischen Kuchen erhält.

Nach dem Backen kann der Kuchen nach Wunsch noch glasiert oder verziert werden, beispielsweise mit Puderzucker bestäubt oder mit einer Schoko- oder Zuckerglasur überzogen werden. In einer bevorzugten Ausführungsform werden diese Dekorationsmittel, beispielsweise Puderzucker oder Zuckerglasur in einer Verpackungseinheit mit dem eingefrorenen Kuchen geliefert.

Das einfache Handling und die damit verbundene schnelle und unkomplizierte Zubereitung geben dem Sandkuchen die Einmaligkeit. Es entfällt die Zugabe von weiteren Zutaten als auch ein Umfüllen der Teigmasse in eine andere Backform.

Die Erfindung wird durch das folgende Beispiel weiter veranschaulicht.

### Beispiel 1

### Rezeptur:

Zucker, Weizenmehl, Eier, Speiseöl, pflanzliche Fette, Weizenpuder (Nüsse, Schokotropfen, Mandeln), Kakao, Stabilisator: Sorbit, Emulgator: E 472, E 472 b, Magermilchpulver, Backtriebmittel: E 450, E 500, Aroma.

### Backanleitung:

Die Folie vom gefrorenen Kuchen entfernen - dann auf ein Backblech oder Gitter setzten und bei 170 °C backen. Nach 10 Minuten Ofen kurz öffnen und die obere Schicht des Kuchens einschneiden und diesen dann weitere 45 bis 50 Minuten fertig backen lassen.

## Patentansprüche

1. Gefrorener Kuchen,
**dadurch gekennzeichnet,**
**dass** der nicht vorgebackene Kuchenteig in einer Backform eingefroren ist.

2. Gefrorener Kuchen nach Anspruch 1,
**dadurch gekennzeichnet,**
**dass** es sich um einen Rührkuchen, insbesondere um einen Bisquit- oder Sandkuchenteig handelt.

3. Gefrorener Rührkuchen nach Anspruch 1,
**dadurch gekennzeichnet,**
**dass** die Backform aus Aluminium oder Pappe besteht und/oder rund, eckig oder in einer gugelhupfartigen Beschaffenheit ist.

4. Gefrorener Rührkuchen nach einem der vorhergehenden Ansprüche,
**dadurch gekennzeichnet,**
**dass** der Teig die Zutaten Mehl, Weizenpuder, Zucker, Eier und Backmittel umfasst.

5. Verfahren zur Herstellung eines gefrorenen Kuchens nach einem der vorhergehenden Ansprüche,
**dadurch gekennzeichnet,**
**dass** man einen zähflüssigen, nicht vorgebackenen Kuchenteig, insbesondere einen Bisquit- oder Sandkuchenteig, in eine Backform füllt und den in der Backform vorliegenden Teig zusammen mit der Backform einfriert.

6. Verfahren nach Anspruch 5,
**dadurch gekennzeichnet,**
**dass** es sich um Rührkuchenteig, insbesondere um einen Bisquit- oder Sandkuchenteig handelt.

7. Verfahren zur Herstellung eines essbaren Kuchens, insbesondere Rührkuchens,
**dadurch gekennzeichnet,**
**dass** man einen zusammen mit der Backform eingefrorenen Kuchen gemäß einem der Ansprüche 1 bis 5 in der vorhandenen Form bäckt.
